# EUROPEAN PATENT SPECIFICATION

(11) **EP 1 975 094 B1**
(45) Date of publication and mention of the grant of the patent: **14.09.2011**
(21) Application number: 07425245.3
(22) Date of filing: 24.04.2007
(51) Int. Cl.: B65G 17/42

(54) **A conveyor device**
Fördervorrichtung
Dispositif de transport

(30) Priority: 27.03.2007 IT RE20070043
(43) Date of publication of application: 01.10.2008
(73) Proprietor: Ferrari Romano Di Ferrari Alessandro E C. S.N.C., 43015 Noceto (Parma) (IT)
(72) Inventor: Ferrari, Alessandro, 43015 Noceto (Parma) (IT)
(74) Representative: Corradini, Corrado

(56) References cited:
- US-A- 3 052 340

## Description

The invention relates to a conveyor device for light objects, as described in the preamble to independent claim 1.

In more detail, the present invention relates to a magnetically-powered conveyor device, principally destined for use in empty plastic bottle processing plants, for transporting the bottles between various operating stations.

A magnetically-powered conveyor generally comprises a plurality of object-carrying devices singly provided with means for gripping an object to be transported, which are slidably coupled to a single fixed rail defining a closed trajectory along which the carrying devices are advanced in succession.

The advancing of the carrying devices is achieved by means of a drawing organ which is slidably ring-wound about a plurality of pulleys, for example a chain or belt, which develops parallel to the guide rail, and which realises a magnetic coupling with the object-carrying devices, in order to draw the devices by advancing them on the guide rail.

The magnetic coupling is typically obtained by realising the drawing organ in a magnetisable material, for example using a steel chain or a belt provided with at least a ferromagnetic layer, and installing a permanent magnet on board each carrying device so that the device attaches by magnetic attraction on the magnetisable drawing organ.

In order to use a magnetic drawing organ of this type in a plant for treating empty plastic bottles, some specific technical requirements of the sector must be met.

In particular the magnetic drawing conveyor must be suitable for transferring empty plastic bottles between two operating stations, for example between a sorting station and a washing station of the bottles, where the upstream station operates discontinuously with separate groups of bottles, while the downstream station operates continuously.

For this reason, the conveyor must be able to create an accumulation of bottles at the downstream station, so as to ensure a constant supply of bottles thereto, which enables the station to work with no production halts.

The accumulation can be obtained by making the slidable drawing organ advance the object-carrying devices at a greater speed than the speed at which the downstream station can receive the bottles. The object-carrying devices can also be temporarily halted at the bottle release point, while the drawing organ continues to run by them.

In this way however, the halting of the object-carrying devices would lead to considerable dragging of the drawing organ against the object-carrying devices, causing rapid wear of the parts in reciprocal contact; hence the need for frequent maintenance and replacement operations, both of the object-carrying devices and the drawing organ.

Another kind of handling apparatus is described in US3052340, which comprises an endless conveyor having an upwardly facing delivery run and a downwardly facing return run, and a plurality of article transporting members adapted to be advanced on the conveyor.

The conveyor includes a plurality of plates which are subjected to magnetic attraction, whereas each article transporting member has a base provided with runner means arranged to bear on the plates of the conveyor, and a magnet affixed to said base in a position to cause the member to cling to the conveyor plates in an upright position while on the delivery run of said conveyor and in an inverted position on said return run.

The apparatus further comprises a stop means located in a position along the line of conveyor travel and movable into the path of the transporting members to arrest them notwithstanding continued movement of the conveyor.

An handling apparatus of this kind has several drawbacks.

In particular, the transporting members are suitable for carrying articles only along the upwardly facing delivery run of the conveyor, because if articles were hung on a transporting member along the downwardly facing return run, the transporting member could detach from the conveyor and fall down due to the weigh of articles.

The stop means for stopping the transporting members can be located only along the upwardly facing delivery run of the conveyor, otherwise the transporting members inevitably fall down.

The speed of the conveyor is limited, because high speeds can cause the detachment of the transporting members, specially along the curved tracts of the conveyor.

The conveyor must be equipped with a number of plates corresponding to the number of transporting members, for each transporting member must be constantly magnetic coupled with a respective plate of the conveyor, otherwise it inevitably fall down.

The aim of the present invention is to make available a new magnetic conveyor device which can effectively be used in the transport of empty plastic bottles, overcoming the drawbacks present in the application of known magnetic conveyors in this technological sector.

A further aim of the invention is to attain the above-mentioned objective in the ambit of a simple, rational and inexpensive solution.

The aims are achieved by the invention as it is characterised in independent claim 1. The dependent claims delineate preferred aspects of the invention.

In particular, the invention provides a conveyor device for transporting objects, typically for the transport of empty plastic bottles, comprising:
a plurality of object-carrying devices which are slidably coupled to first fixed guide means which define a closed circuit, in which the object-carrying devices advance in succession,
at least a drawing organ, slidably ring-wound on a plurality of pulleys, which exhibits at least an operative tract which is parallel to the run of the object-carrying devices, and
means for connecting, for establishing, in the operative tract, a magnetic coupling between the drawing organ and the object-carrying devices, so that the running of the drawing organ advances the devices on the first fixed guide means.

In the invention, the means for connecting comprise a plurality of connecting elements, which are fixed to the drawing organ in such a way as to be reciprocally separate along the longitudinal development thereof; the means for connecting are interposed between the object-carrying devices and the drawing organ at the operating tract, and singly generate a force of magnetic attraction with a respective object-carrying device.

Thanks to this solution, only the above-mentioned connecting elements are in direct contact with the object-carrying devices, so that when the devices are halted to create an accumulation, no relative dragging is created between the object-carrying devices and the drawing organ.

In this way, the causes of wear between the parts are effectively reduced, increasing the reliability of the conveyor device as well as reducing the difficulties and the cost of maintenance interventions.

Further, thanks to the proposed solution, with a single connection element it is advantageously possible to advance a whole group of object-carrying devices.

One object-carrying device alone, advancing as it is drawn by a respective connecting element, can advance one or more further object-carrying devices which are not coupled to any connecting element, and which precede the first device in the advancement direction.

Thus it is not necessary to fix a number of connecting elements on the drawing organ which number is equal to the number of devices to be moved; on the contrary, it is sufficient to use a minimum number of connecting elements which, apart from further reducing the phenomenon of wear, leads to advantages in terms of constructional simplicity of the conveyor device as well as both installation and maintenance costs.

In a first embodiment of the invention, the connecting elements are singly provided with a magnetic body, which interacts with a magnetisable body installed on board each object-carrying device, such as to generate a desired force of magnetic attraction.

In a further embodiment of the invention, the connecting elements are singly provided with a magnetisable body, which interacts with a magnetic body mounted on board each object-carrying device.

Finally, in a third embodiment of the invention, both the connecting elements and the object-carrying devices are singly provided with a magnetic body, so that the magnetic body installed on each connecting element interacts with the magnetic body installed on the object-carrying devices, in order to generate the desired force of magnetic attraction.

All of the above solutions advantageously allow a variation in the entity of the magnetic coupling force between the connecting elements and the object-carrying devices, which is done by carefully selecting the sizes and the material the magnetic bodies and magnetisable bodies are made of, without intervening on the dimensions and the material the drawing organ is made of.

In particular, with small overall dimensions and low costs it is possible to obtain sufficiently high magnetic forces in order to confer high advancement speed on the object-carrying devices, as well as to advance the devices even along inclined or vertical tracts of the trajectory defined by the guide means.

The use of a magnetic body is particularly effective in this sense, both on board the connecting elements and on board the object-carrying devices.

In a preferred embodiment of the invention, along the operative tract in which the magnetic coupling of the connecting elements with the object-carrying devices occurs, the drawing organ is arranged, with respect to the first guide means, such that by effect of the reciprocal magnetic attraction the connecting elements will stay in direct contact with the object-carrying device.

Further, the drawing organ is in turn coupled to second fixed guide means, which cause it to run at a predetermined constant distance from the trajectory of the object-carrying devices, at least along the operative tract.

For example, if the moving organ is a chain, in the invention it is slidably coupled to a respective chain guide.

In this way, an object-carrying device which is magnetically attached to a connecting element is also rigidly constrained to the second guide means, so that during advancement it is constrained to maintain an exact position with respect to the first guide means it runs on.

Apart from ensuring greater transport precision, this constraint advantageously reduces friction between the object-carrying devices and the first guide means, and leads to the possibility of greater advancing speed and therefore greater productivity.

Further characteristics and advantages of the invention will emerge from a reading of the following description, provided by way of non-limiting example, with the aid of the accompanying figures of the drawings, in which:
- figure 1 is a perspective view of a conveyor device of the present invention;
- figure 2 is a plan view of the conveyor device of figure 1;
- figure 3 is section III-III of figure 2;
- figure 4 is section IV-IV of figure 3, in which the object-carrying devices have been removed in order better to evidence some details of the device;
- figure 5 is a lateral view of the conveyor device of figure 1;
- figure 6 is a front view in enlarged scale of an object-carrying device of the conveyor device of figure 1;
- figure 7 is section VII-VII of figure 6;
- figure 8 is section VIII-VIII of figure 7 in enlarged scale;
- figure 9 is a perspective view of the conveyor device of figure 1, simplified in order to remove the motor and better to illustrate some underlying details;
- figure 10 is a plan view of the simplified conveyor device of figure 6;
- figure 11 is section XI-XI of figure 10;
- figure 12 is an enlarged detail of figure 10;
- figure 13 is a detail of figure 12 in a different possible functioning mode of the device;
- figure 14 is a lateral view of a conveyor device in a different embodiment of the invention;
- figure 15 is a plan view of the conveyor device of figure 14, simplified in order to show only some object-carrying devices and to remove the motorisation group in order to show underlying details.

The figures of the drawings illustrate a magnetic conveyor device 1 destined to be installed in a plant for empty plastic bottle 200 treatment; the bottles 200 are to be transferred between two or more operative stations, for example between a sorting station and a washing station, or between a washing station and a filling station.

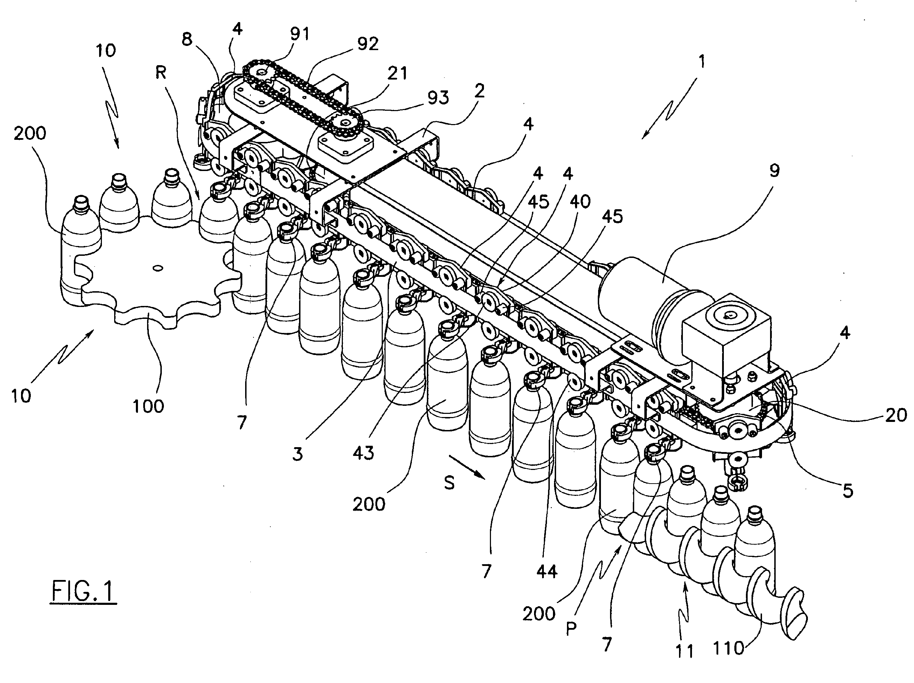

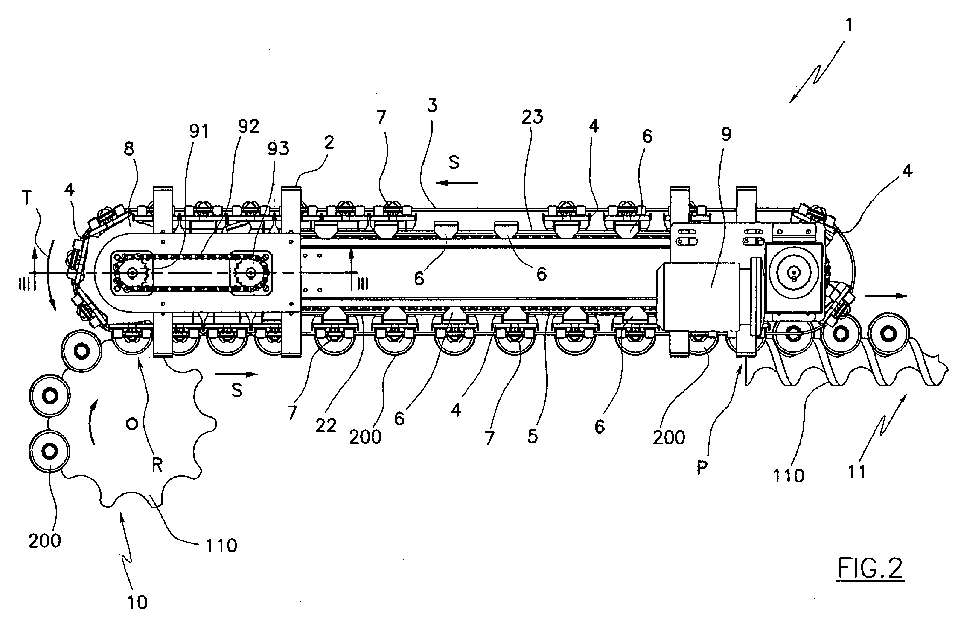

As illustrated in figures 1 and 2, the conveyor device 1 comprises a fixed supply frame 2 which is rested on the ground using appropriate support elements (not illustrated), on which a fixed guide rail 3 is installed, which guide rail 3 defines a closed trajectory in which a plurality of object-carrying devices 4, arranged in succession, is advanced.

The guide rail 3 is formed by a rigid metal strip having a constant transversal section and being rectangular in shape, which has vertically-orientated sides and develops, in plan view, according to the trajectory to be imposed on the object-carrying devices 4. The metal strip is obtained from a plurality of metal plates arranged in succession and reciprocally fixed at heads thereof, for example by welding or other known means.

In the example of figures 1 and 2, the guide rail 3 develops along a single horizontal plane, with respect to which it exhibits a plan development comprising two straight parallel tracts, connected at ends by further circular tracts. Obviously however the guide rail 3 could have any predetermined plan development, generally constituted by straight tracts connected by curved tracts.

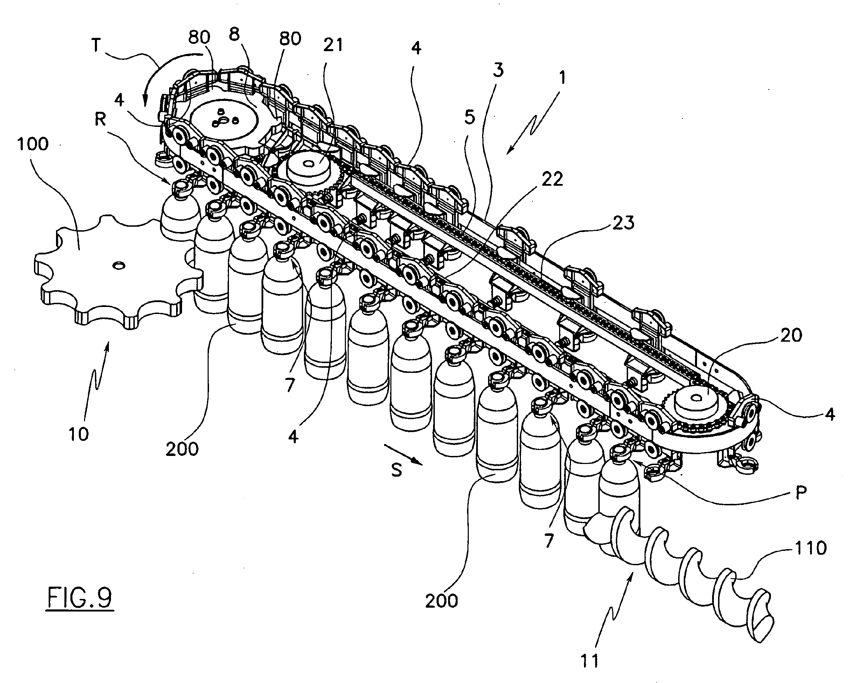

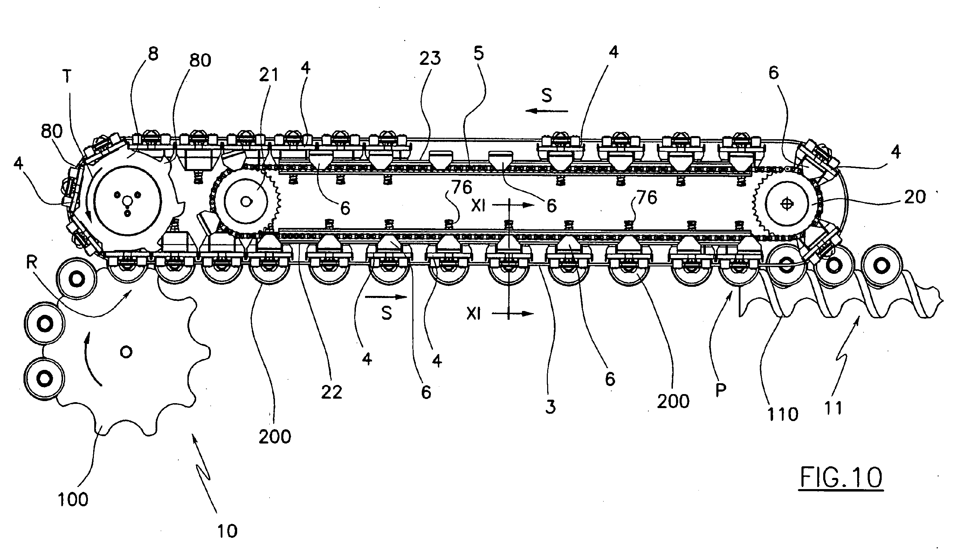

As better illustrated in figures 9 and 10, two cogged pulleys are mounted on the support frame 2, being a motorised pulley 20 and a driven pulley 21, on which a continual drawing organ 5 is ring-wound, in the illustrated example a chain, such that the rotation of the motorised roller 20 causes the chain 5 to run in the advancement direction denoted by S.

The running chain 5 develops in a horizontal plane, parallel to the plane the guide rail 3 lies in and substantially at the same height as the chain 5.

In particular, the chain 5 is completely contained in plan view internally of the space delimited by the guide rail 3, and exhibits a development which is at least partially parallel to the advancement trajectory of the object-carrying devices 4 defined by the guide rail 3.

In the illustrated embodiment, the chain 5 exhibits two straight tracts which are parallel to the straight tracts of the guide rail 3 and which are connected by a circular tract, defined by the winding thereof about the motorised pulley 20, which develops parallel to a circular tract of the guide rail 3.

Obviously, if the guide rail 3 were more tortuous and complicated in plan view, the chain 5 could be wound on a greater number of pulleys, such that it would still be parallel to a long tract of the advancement trajectory of the object-carrying devices 4.

The chain 5 is guided along each straight tract internally of a chain-guide, respectively 22 and 23, which is installed on the support frame 2 and which causes the chain 5 to run at a constant predetermined distance with respect to the trajectory of the object-carrying device 4 defined by the guide rail 3.

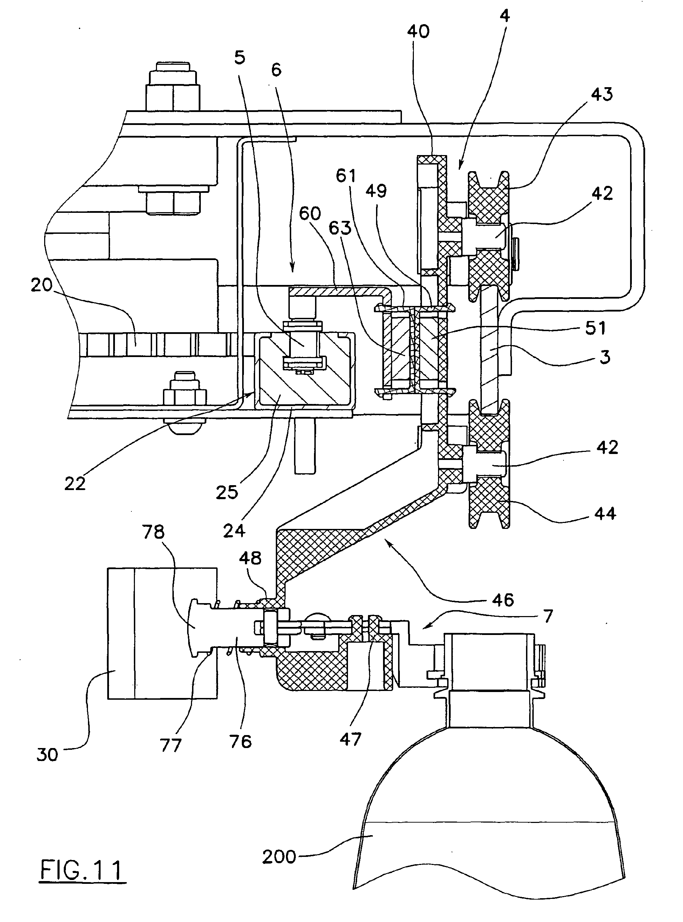

Each chain guide 22, 23 comprises a channel-shaped metal body 24 containing a shaped plastic guard 25 in which the chain runs and is laterally guided (see figure 11).

The upper flank of the chain 5 projects from the open upper side of the channel-shaped metal body 24 such as to be accessible from the outside.

A plurality of identical connecting elements 6 is fixed on the chain 5, which connecting elements 6 are arranged in succession and are separated from one another along the longitudinal development of the chain 5, preferably equidistanced.

As illustrated in figure 11, each connecting element 6 comprises a right-angled bracket 60, preferably made of metal, which is provided with a horizontal portion fixed to the upper projecting flank of the chain 5 and a vertical portion which descends and is interposed between the chain 5 and the guide rail 3, externally of the chain-guide 22 and 23.

In the illustrated embodiment, the chain 5 is of a type in which the links are articulated by hollow link pins, such that the horizontal portion of each bracket 60 is directly connected to two consecutive link pins of the chain 5.

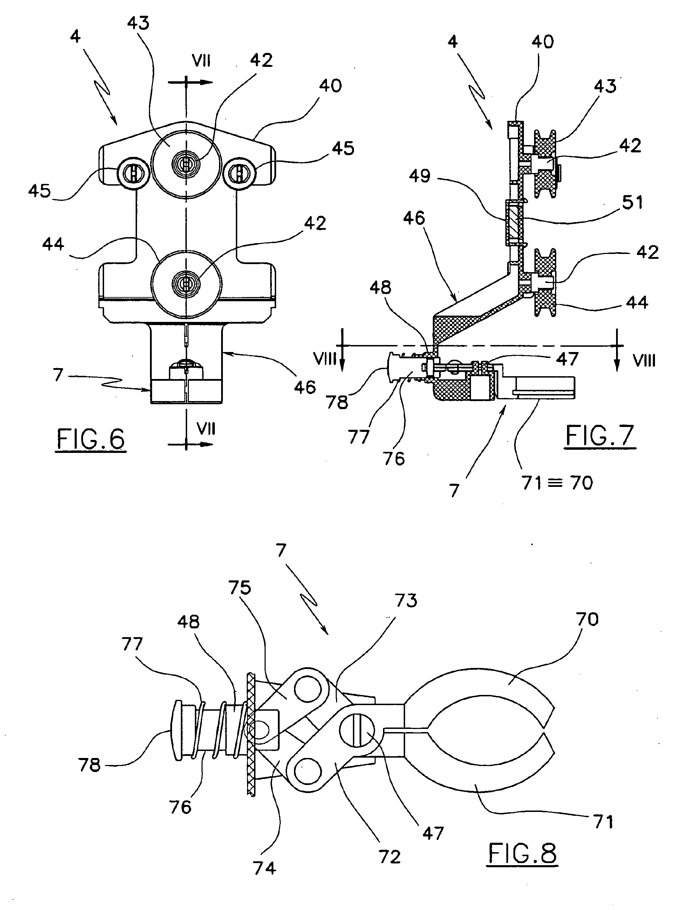

As illustrated in figures 6 and 7, each object-carrying device 4 comprises a monolithic body made of a plastic material, realised preferably by moulding, which exhibits a main portion 40 substantially having a flat wall conformation.

The flat wall 40 has a generally rectangular front shape, lightened in the centre by two opposite chambers which define a central zone having a reduced width.

Two coupling pins 42 project perpendicularly from the front face of the flat wall 40, made in a single body with the flat wall 40 itself, on each of which pins 42 a grooved wheel is rotatably mounted, respectively an upper wheel 43 and a lower wheel 44, each of which wheels rotates about the central axis of the respective coupling pin 42.

The grooved wheels 43, 44 lie in a parallel plane to the flat wall 40 and are dimensioned and reciprocally distanced such that the distance between the bottom of the respective circumferential channels is substantially the same as the width of the metal strip forming the guide rail 3.

As illustrated in figure 11, each object-carrying device 4 is slidably hooked to the guide rail 3 by means of the above-mentioned grooved wheels 43 and 44, the circumferential grooves of which receive the lateral side, respectively upper and lower, of the metal strip, obtaining a stable and secure coupling.

In this way, the grooved wheels 43, 44 of each object-carrying device 4 roll on the upper and lower lateral edges of the metal strip, enabling the relative object-carrying device 4 to run on the guide rail 3, with extremely low friction levels.

In particular, the width of the circumferential grooves of the grooved wheels 43, 44 is at least slightly greater than the thickness of the metal strip of the guide rail 3, so as to leave sufficient transversal play to enable the object-carrying device 4 to pass along the curved tracts of the guide rail 3.

The grooved wheels 43, 44 are made of a plastic material, for example by moulding, and preferably a plastic material having high resistance to wear.

To improve the stability of the running on the guide rail 3, each object-carrying device 4 is further provided with a pair of cylindrical bushings 45 (see figure 6) which are arranged symmetrically on opposite sides of the upper grooved wheel 43, where they are coupled to respective hooking pins which project perpendicularly from the front face of the flat wall 40.

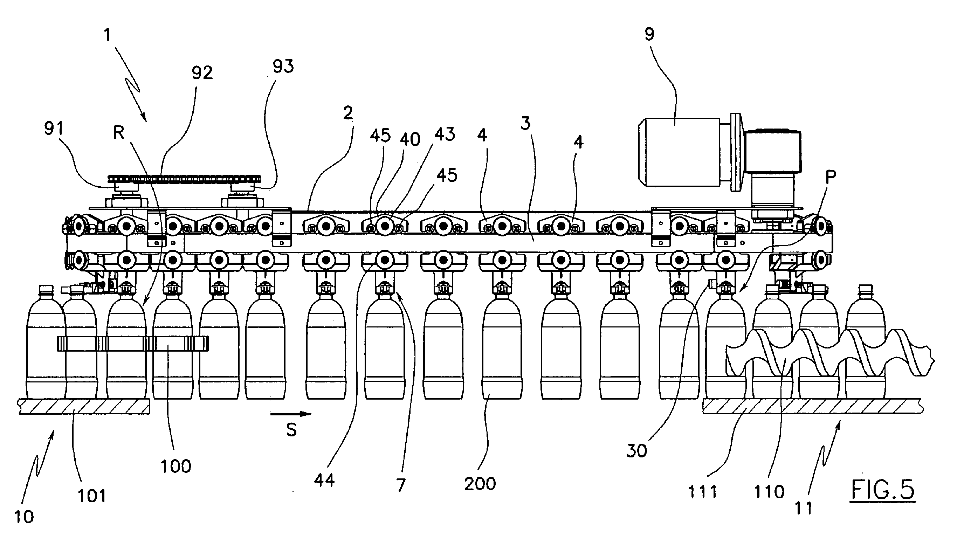

The bushings 45 are preferably made of a plastic material having a high resistance to wear, and drag contactingly on the upper edge of the metal strip of the guide rail 3, such as to prevent the object-carrying device 4 from oscillating in the plane defined by the metal strip (see for example figure 5).

As illustrated in figures 6 and 7, each object-carrying device 4 further exhibits a lower support arm 46 which is hook-shaped and made in a single body with the flat wall 40, at the end of which gripper pliers 7 for a bottle 200 to be transported are installed.

The gripper pliers 7 comprise a pair of opposite shaped jaws 70 and 71, which are located at the ends of two respective activating levers 72 and 73, respectively crossed-over and rotatably hinged to a single vertical-axis coupling pin 47 fashioned in a single body with the support arm 46 and located at the end thereof.

The free ends of the activating levers 72, 73 are hinged to two con rods, respectively 74 and 75, which are in turn hinged to the end of a single command cylinder 76 which is slidably inserted, according to a horizontal sliding axis internally of a guide bushing 48 made in a single body with the support arm 46.

A spring 77 is mounted on the portion of command cylinder 76 which projects from the support arm 46, on the opposite side with respect to the jaws 70 and 71.

The spring 77 is interposed and compressed between the guide bushing 48 and a convex head 78 of the command cylinder 76, which is fashioned at the end thereof.

In this way, the spring 77 exerts an elastic force which tends to push the command cylinder 76 to slide in the guide bushing 48 in a direction distancing it from the coupling pin 47.

Thus, by means of the con rods 74 and 75, the free ends of the activating levers 72, 73 tend to near one another such as to lock the jaws 70, 71 up until a closed configuration is reached, in which the gripping pliers 7 grip and hold the neck of a bottle 200 to be transported.

On the other hand, by pressing the convex head 78 of the command cylinder 76 in an opposite direction to the spring action 77, the activating levers 72, 73 are activated to rotate in the direction of opening the shaped jaws 70 and 71, such as to reach an open configuration in which the gripping pliers 7 collect or release the bottle 200.

In particular, when the shaped jaws 70, 71 are in a closed configuration, the centre of the space they enclose lies substantially in the plane of the grooved wheels 43, and 44, so that the weight of the transported bottle does not create a torque moment which would tend to rotate the object-carrying device 4 in an axis which is parallel to the advancement direction (see figure 11).

As illustrated in figure 11, the object-carrying devices 4 are installed on the guide rail 3 such that the vertical flat wall 40 is interposed between the guide rail 3 and the vertical walls of the connecting elements 6 which are fixed to the chain 5.

A first containing half-shell 49, made of plastic, is removably fixed on the posterior face of the flat wall 40 of each object-carrying device. The first half-shell 49, together with the flat wall 40, closes and holds a magnetic body 51.

Similarly, a second half-shell 61 made of plastic is removably fixed on the front face of the vertical wall of each connecting element 6. Together with the vertical wall of the connecting element 6, the second half-shell 61 closes and holds a magnetic body 63.

In the illustrated embodiment, the magnetic bodies 51 and 63 are two permanent magnets which are substantially shaped as a rectangular plate.

The permanent magnets 51 and 63 are arranged such as to exert a force of reciprocal magnetic attraction, so that when an object-carrying device 4 is in the close vicinity of a connecting element 6, a magnetic connection is generated, of such an entity as to enable the chain 5 to draw the object-carrying device 4, advancing it on the guide rail 3 in the advancement direction S.

In particular, the object-carrying device 4 and the connecting elements 6 are of such size and are arranged in such a way that, in the tract in which the chain 5 runs parallel to the guide rail 3, the force of magnetic attraction keeps each connecting element in direct contact with the respective object-carrying device 4.

In this way, the object-carrying devices 4 are not only guided by the guide rail 3, but also by the chain 5 which, being in turn constrained to the chain guide 22, 23 and to the two pulley wheels 20 and 21, ensures a more precise positioning of the object-carrying device 4 during the transport, with a consequent reduction in the friction forces on the guide rail 3, thus allowing an increase in the advancing velocity.

Obviously the magnetic connection between the object-carrying devices 4 and the connecting elements 6 fixed to the chain 5 can be obtained in other ways.

In particular, the half-shell 61 of each connecting element 6 can include a permanent magnet 63, while the half-shell 49 of each object-carrying device 4 can include a simple magnetisable material body, for example a ferromagnetic material.

Alternatively the half-shell 61 of each connecting element 6 can include a magnetisable body, while the half-shell 49 of each object-carrying device 4 can include a magnet 51.

In the second above-described case, as each connecting element 6 is made of metal, the magnetisable body can simply be the vertical wall of the bracket 60, without the need for realising the second half-shell 61.

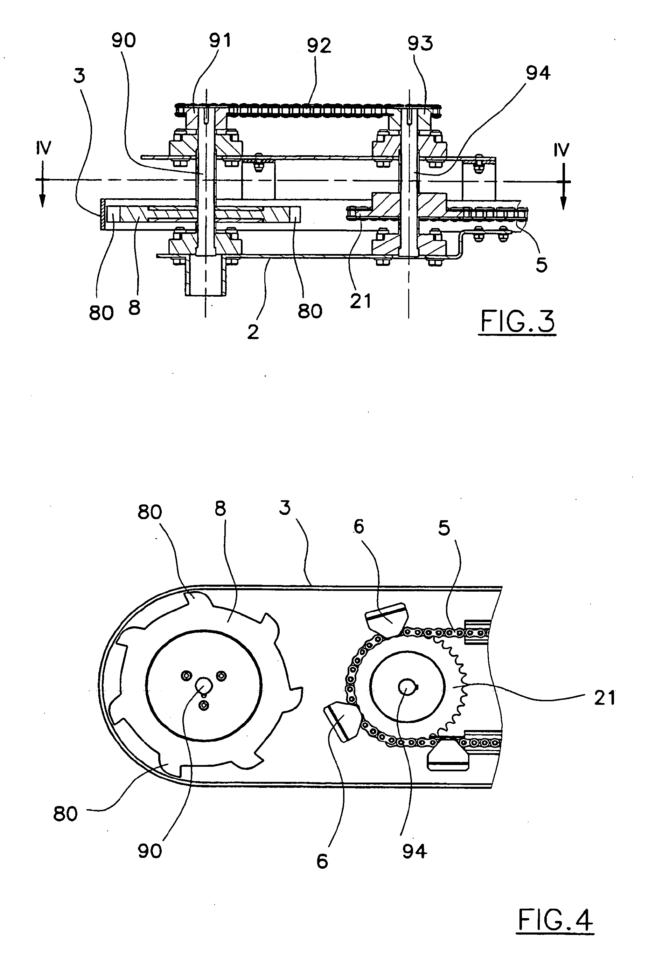

As illustrated in figures 9 and 10, a synchronising wheel, made preferably of plastic, is installed on the support frame 2 of the conveyor device 1. The synchronising wheel 8 is flat and disc-shaped and provided with a plurality of thrust cogs 80, angularly equidistanced and projecting from the lateral edge of the disc (see also figure 4).

The synchronising wheel 8 is horizontally oriented and in plan view located internally of the space delimited by the guide rail 3, substantially coaxial with the circular tract of the metal strip and at the same height as the strip.

The synchronising wheel 8 rotates about the central vertical axis thereof, in a direction T which is the same as the advancement direction S of the chain 5.

Owing to this rotation, each projecting cog 80 hooks one object-carrying device 4 at a time, hooking it at the small zone of the flat wall 40 so as to push it advancingly along the circular tract of the guide rail 3 (see figures 9 and 10).

In this way, the object-carrying devices 4 can be advanced in the circular tract at a controlled speed, generally slower than the speed of the chain 5, and can be placed in step, or can be reciprocally separated by a constant and predetermined step, defined by the distance between the projecting cogs 80 of the synchronising wheel 8.

As illustrated in figure 3, the synchronising wheel 8 is keyed centrally to a vertical rotating shaft 90. The upper end of the rotating shaft 90 bears a first cogged pinion 91, on which a transmission chain 92 is wound, connecting the pinion 91 to a second cogged pinion 93, located at the upper end of a vertical shaft 94 keyed on the driven cogged wheel 21 of the chain 5.

In this way, via a single motor 9 predisposed to rotate the motorised cogwheel 20 (see figure 1), the synchronising wheel 8 is also rotated, through the transmission system constituted by the chain 5 and the transmission chain 92.

Obviously, in order to modify the rotation speed of the synchronising wheel 8 with respect to the chain 5, it is necessary to vary the transmission ratio defined by the cogged pinions 91, 93, and possibly the cogwheels 20 and 21.

As schematically illustrated in figure 1, the conveyor device 1 is destined to be installed in a plant for plastic bottle 200 treatment, between an upstream operating station 10 and a downstream operating station 11.

The upstream operating station 10 is provided with rotating unloading carousel 100, located above a rest plane 101 (see figure 5) which provides, with a constant frequency, a vertically-oriented bottle 200 at a predetermined point R on the rest plane 101.

The downstream operating station 11 is provided with a loading screw 110, also located above a respective rest plane 111, which removes, with constant frequency, a vertically-oriented bottle 200 from a predetermined point P on the rest plane 111.

The conveyor device 1 is configured such that in plan view the trajectory of the object-carrying devices 4 passes through the points R and P, such that each object-carrying device 4, advancing in the direction S along the guide rail 3, can grip a bottle 200 at the collection point R and release it at the release point P.

In particular, the collection point R is in a tract of the trajectory of the object-carrying devices 4 in which the devices 4 are advanced by the synchronising wheel 8.

In this way, by specially regulating the velocity of the synchronising wheel 8, the wheel 8 can be synchronised with the rotating carousel 100 of the upstream station 10, so that the object-carrying devices 4 pass at the collecting position R with the same frequency and at the same instant in which the empty bottles 200 are released by the carousel 100.

Note that at the collection point R, the conveyor device 1 is provided with a fixed cam (not illustrated), which is installed on the support frame 2 at a lower height than the synchronisation wheel 8, such as to act on the convex head 78 of the gripping plier 7 belonging to the object-carrying device 4 in transit from the collection point R.

The fixed cam is shaped and sized such as to open the jaws 70, 71 of the gripping plier 7, in order to receive the neck of the bottle 200, and thereafter to close the jaws 70, 71 in order to grip the bottle 200.

After having gripped the bottle 200, the object-carrying devices 4 are pushed by the synchronisation wheel 8 onto the first guide rail 3, downstream of the gripping point R, where they collect together in reciprocal contact, forming a line which advances discontinuously in direction S, as the synchronisation wheel 8 gradually releases the object-carrying devices 4.

When the first object-carrying device 4 in the line reaches an operating tract of the guide rail 3, in which the guide rail 3 is parallel to the chain 5, the object-carrying device 4 is magnetically hooked by a connecting element 6 which runs solidly with the chain 5.

In other words, as described herein above, the object-carrying device 4 solidly attaches to the connecting element 6, due to the force of magnetic attraction exerted by the permanent magnets 51 and 63.

In this way, the object-carrying device 4 remains solidly connected to the chain 5 which advances it in direction S on the guide rail 3, up to when it reaches the release point P of the bottle 200.

At the release point P, the conveyor device 1 is provided with a second fixed cam 30, which is illustrated schematically in figures 11 and 5, and which is similar to the cam located at the gripping point R.

The cam 30 is installed on the support frame 2 at a lower height than the motorised wheel 20, and is of such a size as to act on the convex head 78 of the gripping pliers 7 belonging to the transiting object-carrying device 4, so as to open the jaws 70, 71 in order to release the neck of the bottle 200.

It is observed that in order to ensure a correct functioning of the downstream station 11, it is usually necessary to create an accumulation of bottles 200 upstream of the release point P, in order to ensure a constant supply to the loading screw 110 of the downstream station 11.

With the conveyor device 1 of the invention, the accumulation is obtained by regulating the speed of the chain 5, so that the object-carrying devices 4 advance at a greater speed than the speed with which the screw 110 distances the bottles 200, and temporarily halting the object-carrying devices 4 upstream of the gripping point P, in order to synchronise the devices 4 with the screw 110. Halting the object-carrying devices 4 implicates the generation of a tangential force which overcomes the magnetic attraction force between the devices 4 and the connecting elements 6, which devices 4 then detach, enabling the chain 5 to continue to run at a constant speed.

In particular, the halting of the object-carrying devices 4 upstream of the release point P can be obtained by means of special halting means (not illustrated), or by direct interference of the screw 110 which acts against the bottles 200, in order to selectively prevent the further advancement of the object-carrying devices 4.

In any case, upstream of the release point P a line of object-carrying devices 4 in reciprocal contact is formed, which devices 4 are left free, to advance one at a time in synchrony with the screw 110.

When the first object-carrying device 4 in the line is left free to advance, it magnetically hooks with a connecting element 6 of the chain 5, which causes it to transit from the release point P, and returns it towards the synchronising wheel 8 for a new cycle.

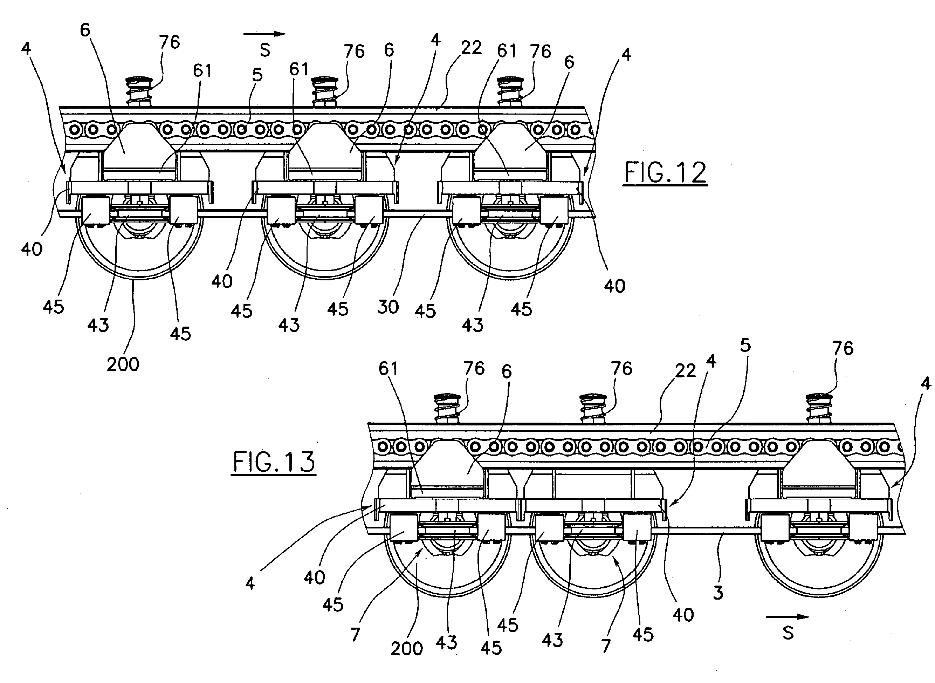

Of further note is the fact that along the operating tracts of the guide rails 3, each object-carrying device 4 can be advanced by a respective connecting element 6 of the chain 5, as illustrated in the detail of figure 12.

This is however not a necessary condition for the operation of the conveyor device 1. As illustrated in figure 13, it is possible for a line of two or more consecutive object-carrying devices 4 to be advanced by a single connecting element 6, which is magnetically connected to the last device 4 in the line, with respect to the advancement direction S. In this way, the overall number of the connecting elements 6 can be reduced, simplifying the conveyor device 1 and reducing the costs connected thereto.

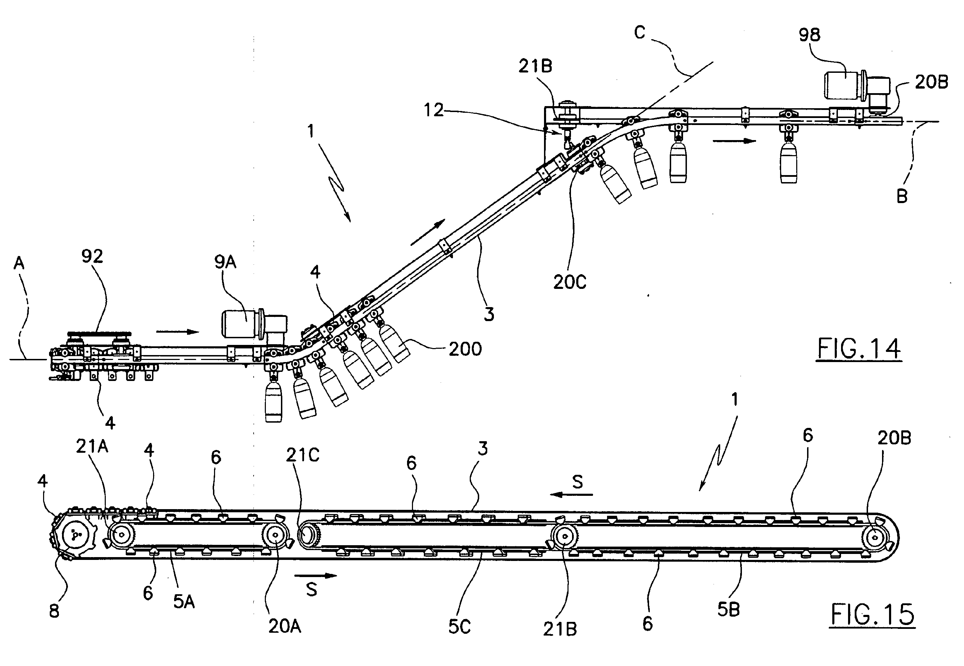

Figures 14 and 15 illustrate an embodiment of the conveyor device 1 which enables the bottles 200 to be moved at different heights, in order to occupy the spaces inside plants more rationally, for example freeing up floor space.

In the second embodiment, the metal strip forming the guide rail 3 develops, not on a single plane, but on a plurality of reciprocally inclined planes.

In the illustrated embodiment, the guide rail develops continuously along a first horizontal plane A, on an inclined plane C (inclined by about 30° to the horizontal), and finally on a second horizontal plane B, located higher than the first horizontal plane A.

The advancing of the object-carrying devices 4 along the guide rail 3 is obtained by means of three distinct chains, of which a first chain 5A lies on the first horizontal plane A, a second chain 5C lies in the inclined plane C, and a third chain 5B lines in the second horizontal plane B.

Each chain 5A-5C is ring-wound on a relative pair of cogwheels, respective motorised 20A-20C and driven 21A-21C, which are installed on the support frame 2, and is provided with a respective plurality of equidistanced connecting elements 6, exactly similar to those described herein above.

In detail, the chain 5A is activated by a first electric motor 9A which is directly connected to the motorised cogwheel 20A. The first electric motor also drives a synchronisation wheel 8 of the same type as the one described in the first embodiment, which lies on the horizontal plane A and is connected to the driven wheel 21A of the chain 5A, by means of a transmission chain 92.

The chain 5B is driven by a second electric motor 9B which is directly connected to the motorised cogwheel 20B. The driven wheel 21B of the chain 5B is in turn connected, by means of a cardanic joint 12, to the motorised wheel 20C of the chain 5C, so that the chain 5C is also driven by the electric motor 9B.

The functioning of the conveyor device 1 in this embodiment is entirely similar to the one described for the first embodiment.

Obviously an expert in the field might make numerous modifications of a technical-application nature to the invention without its forsaking the sought ambit of protection, as claimed in the accompanying claims.

## Claims

1. A conveyor device, typically for empty plastic bottles, comprising a plurality of object-carrying devices (4), first fixed guide means (3) defining a predetermined trajectory in which the object-carrying devices (4) advance in succession, at least one drawing organ (5), slidably ring-wound on a plurality of pulleys (20, 21), which at least one drawing organ (5) exhibits at least one operative tract which is parallel to the trajectory of the object-carrying devices (4), and means for connecting (6, 51, 63) for establishing, in the operative tract, a magnetic coupling between the drawing organ (5) and the object-carrying devices (4), such that the sliding of the drawing organ (5) advances the object-carrying devices (4) on the first fixed guide means (3), wherein the means for connecting comprise a plurality of connecting elements (6) which are fixed on the drawing organ (5) in such a way as to be reciprocally distanced along a longitudinal development of the drawing organ (5), the means for connecting being interposed between the object-carrying devices (4) and the drawing organ (5) at the operative tract, and the means for connecting singly generating a force of reciprocal magnetic attraction with an object-carrying device (4), **characterised in that** the predetermined trajectory defined by the first fixed guide means (3) is a closed trajectory in an horizontal plane, and **in that** the object-carrying devices (4) are slidably hooked with a stable and secure coupling to said first fixed guide means (3).

2. The device of claim 1, **characterised in that** the connecting elements (6) are singly provided with a magnetic body (63), which magnetic body (63) interacts with a magnetisable body installed on board the object-carrying device (4), such as to generate the force of magnetic attraction.

3. The device of claim 1, **characterised in that** the connecting elements (6) are singly provided with a magnetisable body, which interacts with a magnetic body (51) installed on board the object-carrying device (4), such as to generate the force of magnetic attraction.

4. The device of claim 1, **characterised in that** the connecting elements (6) are singly provided with a first magnetic body (63) which interacts with a second magnetic body (51) installed on board the object-carrying device (4), such as to generate the force of magnetic attraction.

5. The device of claim 1, **characterised in that** in the first operative tract, the connecting elements (6) remain in contact with the object-carrying devices (4) by effect of the force of reciprocal attraction.

6. The device of claim 5, **characterised in that** the drawing organ (5) is slidably coupled to second fixed guide means (22, 23), which are arranged at least at the operative tract, such as to constrain the drawing organ (5) to slide parallel to and at a predetermined distance from the first guide means (3) of the object-carrying devices (4).

7. The device of claim 1, **characterised in that** the trajectory of the object-carrying devices (4) develops in a single lie plane.

8. The device of claim 7, **characterised in that** in use the lie plane is a horizontal plane.

9. The device of claim 7, **characterised in that** the drawing organ (5) develops in a parallel plane to the lie plane, and is contained in an internal space, delimited by the first guide means (3), of the object-carrying devices (4).

10. The device of claim 1, **characterised in that** the first guide means (3) define a trajectory for the object-carrying device (4) which trajectory develops on a plurality of reciprocally-inclined lie planes (A, B, C).

11. The device of claim 10, **characterised in that** in each of the lie planes (A, B, C), the device comprises at least a drawing organ (5A, 5B, 5C) which develops in a parallel plane to the lie plane (A, B, C), and which is contained in the internal space delimited by the first guide means (3) in the lie plane (A, B, C).

12. The device of claim 1, **characterised in that** the drawing organ (5) is a chain.

13. The device of claim 1, **characterised in that** the first guide means for the object-carrying devices comprise a rigid strip (3) and **in that** each object-carrying device (4) is provided with a pair of grooved wheels (43, 44) which roll on opposite lateral edges of the strip (3).

14. The device of claim 1, **characterised in that** each object-carrying device (4) is provided with a plier device (7) which grips the objects to be transported.

## Patentansprüche

1. Fördereinrichtung, typischerweise für leere Kunststoffflaschen, umfassend eine Vielzahl von Objekttragvorrichtungen (4), erste unbewegliche Führungsmittel (3), die eine vorbestimmte Bahn definieren, auf der sich die Objekttragvorrichtungen (4) hintereinander vorwärts bewegen, mindestens ein Zugorgan (5), das zum Gleiten befähigt ringförmig um eine Vielzahl von Rollen (20, 21) gewunden ist, wobei das mindestens eine Zugorgan (5) mindestens einen Arbeitsabschnitt aufweist, der parallel zur Bahn der Objekttragvorrichtungen (4) verläuft, und Verbindungsmittel (6, 51, 63) zum Herstellen im Arbeitsabschnitt einer magnetischen Verbindung zwischen dem Zugorgan (5) und den Objekttragvorrichtungen (4) derart, dass das Gleiten des Zugorgans (5) die Objekttragvorrichtungen (4) auf den ersten unbeweglichen Führungsmitteln (3) vorwärts bewegt, wobei die Verbindungsmittel eine Vielzahl von Verbindungselementen (6) umfassen, die derart am Zugorgan (5) befestigt sind, dass sie längs eines longitudinalen Verlaufs des Zugorgans (5) voneinander beabstandet sind, wobei die Verbindungsmittel zwischen die Objekttragvorrichtungen (4) und das Zugorgan (5) im Arbeitsabschnitt eingefügt sind und wobei die Verbindungsmittel einzeln eine Kraft gegenseitiger magnetischer Anziehung zu einer Objekttragvorrichtung (4) erzeugen, **dadurch gekennzeichnet, dass** die durch die ersten unbeweglichen Führungsmittel (3) definierte vorbestimmte Bahn eine geschlossene Bahn in einer waagrechten Ebene ist, und dass die Objekttragvorrichtungen (4) zum Gleiten befähigt mit einer dauerhaften und sicheren Kopplung in die ersten unbeweglichen Führungsmittel (3) eingehängt sind.

2. Einrichtung nach Anspruch 1, **dadurch gekennzeichnet, dass** die Verbindungselemente (6) einzeln mit einem magnetischen Körper (63) versehen sind, wobei der magnetische Körper (63) mit einem magnetisierbaren Körper interagiert, der auf die Objekttragvorrichtung (4) installiert ist, um die magnetische Anziehungskraft zu erzeugen.

3. Einrichtung nach Anspruch 1, **dadurch gekennzeichnet, dass** die Verbindungselemente (6) einzeln mit einem magnetisierbaren Körper versehen sind, der mit einem magnetischen Körper (51) interagiert, der auf die Objekttragvorrichtung (4) installiert ist, um die magnetische Anziehungskraft zu erzeugen.

4. Einrichtung nach Anspruch 1, **dadurch gekennzeichnet, dass** die Verbindungselemente (6) einzeln mit einem ersten magnetischen Körper (63) versehen sind, der mit einem zweiten magnetischen Körper (51) interagiert, der auf die Objekttragvorrichtung (4) installiert ist, um die magnetische Anziehungskraft zu erzeugen.

5. Einrichtung nach Anspruch 1, **dadurch gekennzeichnet, dass** die Verbindungselemente (6) im ersten Arbeitsabschnitt infolge der gegenseitigen Anziehungskraft in Kontakt mit den Objekttragvorrichtungen (4) bleiben.

6. Einrichtung nach Anspruch 5, **dadurch gekennzeichnet, dass** das Zugorgan (5) zum Gleiten befähigt mit zweiten unbeweglichen Führungsmitteln (22, 23) verbunden ist, die zumindest im Arbeitsabschnitt angeordnet sind, um das Zugorgan (5) zu zwingen, parallel und in einem vorbestimmten Abstand zu den ersten Führungsmitteln (3) der Objekttragvorrichtungen (4) zu gleiten.

7. Einrichtung nach Anspruch 1, **dadurch gekennzeichnet, dass** die Bahn der Objekttragvorrichtungen (4) in einer einzigen Lageebene verläuft.

8. Einrichtung nach Anspruch 7, **dadurch gekennzeichnet, dass** die Lageebene beim Gebrauch eine waagrechte Ebene ist.

9. Einrichtung nach Anspruch 7, **dadurch gekennzeichnet, dass** das Zugorgan (5) in einer zur Lageebene parallelen Ebene verläuft und in einem durch die ersten Führungsmittel (3) begrenzten inneren Raum der Objekttragvorrichtungen (4) enthalten ist.

10. Einrichtung nach Anspruch 1, **dadurch gekennzeichnet, dass** die ersten Führungsmittel (3) eine Bahn für die Objekttragvorrichtung (4) definieren, die in einer Vielzahl von zueinander geneigten Lageebenen (A, B, C) verläuft.

11. Einrichtung nach Anspruch 10, **dadurch gekennzeichnet, dass** die Einrichtung in jeder der Lageebenen (A, B, C) mindestens ein Zugorgan (5A, 5B, 5C) umfasst, das in einer zur Lageebene (A, B, C) parallelen Ebene verläuft und in dem durch die ersten Führungsmittel (3) in der Lageebene (A, B, C) begrenzten inneren Raum enthalten ist.

12. Einrichtung nach Anspruch 1, **dadurch gekennzeichnet, dass** das Zugorgan (5) eine Kette ist.

13. Einrichtung nach Anspruch 1, **dadurch gekennzeichnet, dass** die ersten Führungsmittel für die Objekttragvorrichtungen einen starren Steg (3) umfassen, und dass jede Objekttragvorrichtung (4) mit einem Paar Rillenrädern (43, 44) versehen ist, die auf gegenüberliegenden Seitenkanten des Stegs (3) rollen.

14. Einrichtung nach Anspruch 1, **dadurch gekennzeichnet, dass** jede Objekttragvorrichtung (4) mit einer Zangenvorrichtung (7) versehen ist, welche die zu befördernden Objekte greift.

## Revendications

1. Dispositif convoyeur, typiquement pour les bouteilles en plastique vides, comprenant une pluralité de dispositifs de transport d'objets (4), des premiers moyens de guidage fixes (3) définissant une trajectoire prédéterminée dans laquelle les dispositifs de transport d'objets (4) avancent en succession, au moins un organe de traction (5), enroulé en anneau par coulissement sur une pluralité de poulies (20, 21), lequel au moins un organe de traction (5) présente au moins une étendue opérationnelle qui est parallèle à la trajectoire des dispositifs de transport d'objets (4), et des moyens de connexion (6, 51, 63) pour établir, dans l'étendue opérationnelle, un couplage magnétique entre l'organe de traction (5) et les dispositifs de transport d'objets (4), de telle sorte que le coulissement de l'organe de traction (5) fait avancer les dispositifs de transport d'objets (4) sur les premiers moyens de guidage fixes (3), où les moyens de connexion comprennent une pluralité d'éléments de connexion (6) qui sont fixés sur l'organe de traction (5) de telle manière à être distanciés réciproquement le long d'un développement longitudinal de l'organe de traction (5), les moyens de connexion étant interposés entre les dispositifs de transport d'objets (4) et l'organe de traction (5) en correspondance de l'étendue opérationnelle, et les moyens de connexion individuelle générant une force d'attraction magnétique réciproque avec un dispositif de transport d'objets (4), **caractérisé en ce que** la trajectoire prédéterminée définie par les premiers moyens de guidage fixes (3) est une trajectoire fermée dans un plan horizontal, et **en ce que** les dispositifs de transport d'objets (4) sont accrochés par coulissement avec un couplage stable et sûr auxdits premiers moyens de guidage fixes (3).

2. Dispositif de la revendication 1, **caractérisé en ce que** les éléments de connexion (6) sont pourvus individuellement d'un corps magnétique (63), lequel corps magnétique (63) interagit avec un corps magnétisable installé à bord du dispositif de transport d'objets (4), de telle sorte à générer la force d'attraction magnétique.

3. Dispositif de la revendication 1, **caractérisé en ce que** les éléments de connexion (6) sont pourvus individuellement d'un corps magnétisable, qui interagit avec un corps magnétique (51) installé à bord du dispositif de transport d'objets (4), de telle sorte à générer la force d'attraction magnétique.

4. Dispositif de la revendication 1, **caractérisé en ce que** les éléments de connexion (6) sont pourvus individuellement d'un premier corps magnétique (63) qui interagit avec un second corps magnétique (51) installé à bord du dispositif de transport d'objets (4), de telle sorte à générer la force d'attraction magnétique.

5. Dispositif de la revendication 1, **caractérisé en ce que** dans la première étendue opérationnelle, les éléments de connexion (6) restent en contact avec les dispositifs de transport d'objets (4) par effet de la force d'attraction réciproque.

6. Dispositif de la revendication 5, **caractérisé en ce que** l'organe de traction (5) est couplé par coulissement à des seconds moyens de guidage fixes (22, 23), qui sont disposés au moins en correspondance de l'étendue opérationnelle, de telle sorte à contraindre l'organe de traction (5) à coulisser en parallèle et à une distance prédéterminée par rapport aux premiers moyens de guidage (3) des dispositifs de transport d'objet (4).

7. Dispositif de la revendication 1, **caractérisé en ce que** la trajectoire des dispositifs de transport d'objet (4) se développe dans un unique plan de pose.

8. Dispositif de la revendication 7, **caractérisé en ce que**, lors de l'utilisation, le plan de pose est un plan horizontal.

9. Dispositif de la revendication 7, **caractérisé en ce que** l'organe de traction (5) se développe dans un plan parallèle au plan de pose, et est contenu dans un espace interne, délimité par les premiers moyens de guidage (3), des dispositifs de transport d'objets (4).

10. Dispositif de la revendication 1, **caractérisé en ce que** les premiers moyens de guidage (3) définissent une trajectoire pour le dispositif de transport d'objets (4) laquelle trajectoire se développe sur une pluralité de plans de pose réciproquement inclinés (A, B, C).

11. Dispositif de la revendication 10, **caractérisé en ce que** dans chacun des plans de pose (A, B, C), le dispositif comprend au moins un organe de traction (5A, 5B, 5C) qui se développe dans un plan parallèle au plan de pose (A, B, C), et qui est contenu dans l'espace interne délimité par les premiers moyens de guidage (3) dans le plan de pose (A, B, C).

12. Dispositif de la revendication 1, **caractérisé en ce que** l'organe de traction (5) est une chaîne.

13. Dispositif de la revendication 1, **caractérisé en ce que** les premiers moyens de guidage pour les dispositifs de transport d'objets comportent une bande rigide (3) et **en ce que** chaque dispositif de transport d'objets (4) est pourvu d'une paire de roues rainurées (43, 44) qui roulent sur des bords latéraux opposés de la bande (3).

14. Dispositif de la revendication 1, **caractérisé en ce que** chaque dispositif de transport d'objets (4) est pourvu d'un dispositif de pince (7) qui saisit les objets à transporter.
